(19) Europäisches Patentamt
European Patent Office
Office européen des brevets

(11) EP 2 685 654 A1

(12) EUROPEAN PATENT APPLICATION
published in accordance with Art. 153(4) EPC

(43) Date of publication:
15.01.2014 Bulletin 2014/03

(51) Int Cl.:
H04L 1/16 (2006.01)  H04L 1/18 (2006.01)
H04L 12/56 (0000.00)

(21) Application number: 11861044.3

(22) Date of filing: 25.10.2011

(86) International application number:
PCT/CN2011/081255

(87) International publication number:
WO 2012/122802 (20.09.2012 Gazette 2012/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 11.03.2011 CN 201110059115

(71) Applicant: Huawei Technologies Co., Ltd.
Shenzhen, Guangdong 518129 (CN)

(72) Inventors:
• CAO, Jianbo
Shenzhen
Guangdong 518129 (CN)

• YU, Guanding
Shenzhen
Guangdong 518129 (CN)
• ZHANG, Jietao
Shenzhen
Guangdong 518129 (CN)
• LUO, Zezhou
Shenzhen
Guangdong 518129 (CN)

(74) Representative: Pfenning, Meinig & Partner GbR
Theresienhöhe 13
80339 München (DE)

(54) **A METHOD, RELAY STATION, BASE STATION AND COMMUNICATION SYSTEM FOR DATA RETRANSMISSION**

(57) A data retransmission method, a relay station, a base station, and a communication system are provided. The data retransmission method includes: receiving, by a relay station, a reception report sent by a base station and source data frames of a current transmission period that are sent by a user equipment through a subchannel, where the reception report carries sequence numbers of source data frames of a previous transmission period and the source data frames are not correctly received by the base station; obtaining, by the relay station according to the reception report and pre-stored source data frames of the previous transmission period, a set C1 of source data frames of the previous transmission period that need to be retransmitted; performing, by the relay station, joint encoding for the source data frames in the set C1 and the source data frames of the current transmission period; and sending, by the relay station, forwarded data frames generated by joint encoding to the base station through the subchannel. Embodiments of the present invention also provide a data retransmission method, a relay station, a base station, and a communication system. With the above solutions, the relay station can retransmit data and the user equipment can send new packet data simultaneously, thereby improving transmission efficiency.

| | |
|---|---|
| Receive a reception report sent by a base station and source data frames of a current transmission period that are sent by a user equipment through a subchannel, where the reception report carries sequence numbers of source data frames of a previous transmission period and the source data frames are not correctly received by the base station | 101 |
| Obtain, according to the reception report and pre-stored source data frames of the previous transmission period, a set C1 of source data frames of the previous transmission period that need to be retransmitted | 102 |
| Perform joint encoding for the source data frames in the set and the source data frames of the current transmission period | 103 |
| Send the forwarded data frames generated by joint encoding to the base station through the subchannel | 104 |

FIG. 1

## Description

This application claims priority to Chinese Patent Application No. 201110059115.4, filed with the Chinese Patent Office on March 11, 2011 and entitled "DATA RETRANSMISSION METHOD, RELAY STATION, BASE STATION, AND COMMUNICATION SYSTEM", which is incorporated herein by reference in its entirety.

## FIELD OF TECHNOLOGY

The present invention relates to the field of wireless communication technologies, and in particular, to a data retransmission method, a relay station, a base station, and a communication system.

## BACKGROUND

A collaborative communication technology uses the broadcast feature of a wireless network to enable a relay node to receive signals sent to a destination node, allows a collaborator to process the received signals and transmit the signals to the destination node, and then allows the destination node to combine and process the received signals, thereby reducing the adverse impact caused by the fading and instability of a wireless link and improving the reliability and data transmission rate of the network. A link-layer automatic repeat request (Auto Repeat reQuest, ARQ) protocol may be used to resist the fading of a wireless channel in a communication system and improve the reliability of packet transmission.

A relay-based data retransmission method provided in the prior art includes the following:

1. Multiple user equipments encode their respective packet data to obtain source data frames and redundant data frames, and send the source data frames to a base station and a relay station on a time division multiplexing basis.
2. The base station and the relay station receive the source data frames sent by two user equipments, decode the source data frames, and generate reception reports according to decoding results. The base station sends the generated reception report to the relay station. The base station and the relay station send their respective reception reports to the user equipments.
3. According to the received reception report, the relay station determines whether it is necessary to forward the data to the base station.
4. If the base station can correctly decode the source data frames of only one user, but the relay station can correctly decode the source data frames of another user, or if the base station cannot correctly decode the source data frames of the two users, but the relay station can correctly decode the source data frames of only one user, the relay station regenerates redundant data frames of the user and sends the frames to the base station.
5. If the base station cannot correctly decode the source data frames of the two users, but the relay station can correctly decode the source data frames of the two users, the relay node regenerates redundant data frames of the two users, and then performs physical-layer network encoding for the frames, that is, the relay node superposes the redundant data frames of the two users, and then sends the encoded signals to the base station.

During the study of the prior art, the inventor finds the following problems: In the prior art, user equipments transmit data frames on a time division multiplexing basis, and the relay station needs to use additional transmission timeslots when forwarding data to the base station; in addition, in the period of the additional transmission timeslots, the user equipments cannot send new packet data, resulting in low transmission efficiency.

## SUMMARY

The present invention provides a data retransmission method, a relay station, a base station, and a communication system, enabling the relay station to retransmit data and a user equipment to send new packet data simultaneously, thereby improving transmission efficiency.

To solve the technical problems, the embodiments of the present invention are implemented through the following technical solutions.

An embodiment of the present invention provides a data retransmission method, including:

receiving a reception report sent by a base station and source data frames of a current transmission period that are sent by a user equipment through a subchannel, where the reception report carries sequence numbers of source data frames of a previous transmission period and the source data frames are not correctly received by the base station;

according to the reception report and pre-stored source data frames of the previous transmission period, obtaining a set C1 of source data frames of the previous transmission period that need to be retransmitted;

performing joint encoding for the source data frames in the set C1 and the source data frames of the current transmission period; and

sending forwarded data frames generated by joint encoding to the base station through the subchannel.

An embodiment of the present invention also provides a data retransmission method, including:

receiving source data frames and forwarded data frames, where a user equipment sends the source data frames and a relay station sends the forwarded data frames through a same subchannel in sequence;

according to the source data frames and the forwarded data frames, decoding source data frames of a current transmission period and source data frames of a previous transmission period; and

if the source data frames of the current transmission period are decoded unsuccessfully, sending a reception report to the relay station, where the reception report carries sequence numbers of source data frames of the current transmission period and the source data frames are not correctly received by the base station.

An embodiment of the present invention also provides a base station, including:

a second data receiving unit, configured to receive source data frames and forwarded data frames, where a user equipment sends the source data frames and a relay station sends the forwarded data frames through a same subchannel in sequence;

a data decoding unit, configured to decode, according to the source data frames and the forwarded data frames, source data frames of a current transmission period and source data frames of a previous transmission period; and

a reception report sending unit, configured to send a reception report to the relay station if the source data frames of the current transmission period are decoded unsuccessfully, where the reception report carries sequence numbers of source data frames of the current transmission period and the source data frames are not correctly received by the base station.

An embodiment of the present invention also provides a relay station, including:

a report receiving unit, configured to receive a reception report sent by a base station, where the reception report carries sequence numbers of source data frames of a previous transmission period and the source data frames are not correctly received by the base station;

a first data receiving unit, configured to receive source data frames of a current transmission period that are sent by a user equipment through a subchannel;

a first retransmitted data obtaining unit, configured to obtain, according to the reception report and pre-stored source data frames of the previous transmission period, a set C1 of source data frames of the previous transmission period that need to be retransmitted;

a data encoding unit, configured to perform joint encoding for the source data frames in the set C1 and the source data frames of the current transmission period; and

a first data forwarding unit, configured to send forwarded data frames generated by joint encoding to the base station through the subchannel.

Finally an embodiment of the present invention further provides a communication system, including the above base station and relay station.

In the technical solutions provided by the embodiments of the present invention, after obtaining the source data frames of the previous transmission period that need to be retransmitted, the relay station performs joint encoding for the source data frames that need to be retransmitted and the source data frames of the current transmission period, and sends the forwarded data frames generated by joint encoding to the base station through the subchannel, that is, the relay station simultaneously sends the encoded data of source data frames of the previous transmission period and source data frames of the current transmission period. Compared with the prior art, the relay station in the embodiments of the present invention does not require additional timeslots to send data frames that need to be retransmitted, which does not affect data transmission of a next transmission period, and therefore, data transmission efficiency is high.

**BRIEF DESCRIPTION OF THE DRAWINGS**

To illustrate the technical solutions in the embodiments of the present invention more clearly, the accompanying drawings required for describing the embodiments of the present invention are briefly introduced in the following. Apparently, the accompanying drawings in the following merely show some embodiments of the present invention, and persons of ordinary skill in the art may still derive other drawings from these accompanying drawings without any creative effort.

FIG. 1 is a flowchart of a data retransmission method according to a first embodiment of the present invention;

FIG. 2 is a flowchart of a method for a relay station to obtain a set C1 of source data frames of a previous transmission period that need to be retransmitted in a data retransmission method according to an embodiment of the present invention;

FIG. 3 is a flowchart of a method for performing joint encoding for source data frames in a set C1 and source data frames of a current transmission period in a data retransmission method according to an embodiment of the present invention;

FIG. 4 is a flowchart of a data retransmission method according to a second embodiment of the present invention;

FIG. 5 is a flowchart of a data retransmission method according to a third embodiment of the present invention;

FIG. 6 is a flowchart of a data retransmission method according to a fourth embodiment of the present invention;

FIG. 7 is a flowchart of a method for decoding, according to source data frames and forwarded data frames, source data frames of a current transmission period and source data frames of a previous transmission period in a data retransmission method according to the fourth embodiment of the present invention;

FIG. 8 is an application scenario diagram of a data retransmission method according to a fifth embodiment of the present invention;

FIG. 9 is a flowchart of a data retransmission method according to the fifth embodiment of the present invention;

FIG. 10 is a simulation diagram for comparing performance between a data retransmission method in an embodiment of the present invention and a data retransmission method in the prior art;

FIG. 11 is a schematic simulation diagram of throughput of a data retransmission method in an embodiment of the present invention and throughput of a data retransmission method in the prior art;

FIG. 12 is a schematic structural diagram of a relay station according to a sixth embodiment of the present invention;

FIG. 13 is a schematic structural diagram of a first retransmitted data obtaining unit in a base station according to an embodiment of the present invention;

FIG. 14 is a schematic structural diagram of a data encoding unit in a relay station according to the sixth embodiment of the present invention;

FIG. 15 is a schematic structural diagram of a base station according to a seventh embodiment of the present invention;

FIG. 16 is a schematic structural diagram of a base station according to an eighth embodiment of the present invention;

FIG. 17 is a schematic structural diagram of a data decoding unit in a base station according to an embodiment of the present invention;

FIG. 18 is a schematic structural diagram of a base station according to a ninth embodiment of the present invention; and

FIG. 19 is a schematic structural diagram of a communication system according to a tenth embodiment of the present invention.

## DETAILED DESCRIPTION

The technical solutions in the embodiments of the present invention are clearly and completely described in the following with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

The present invention provides a data retransmission method, a relay station, a base station, and a communication system. To help understand the technical solutions of the present invention better, the embodiments of the present invention are hereinafter described in detail with reference to the accompanying drawings.

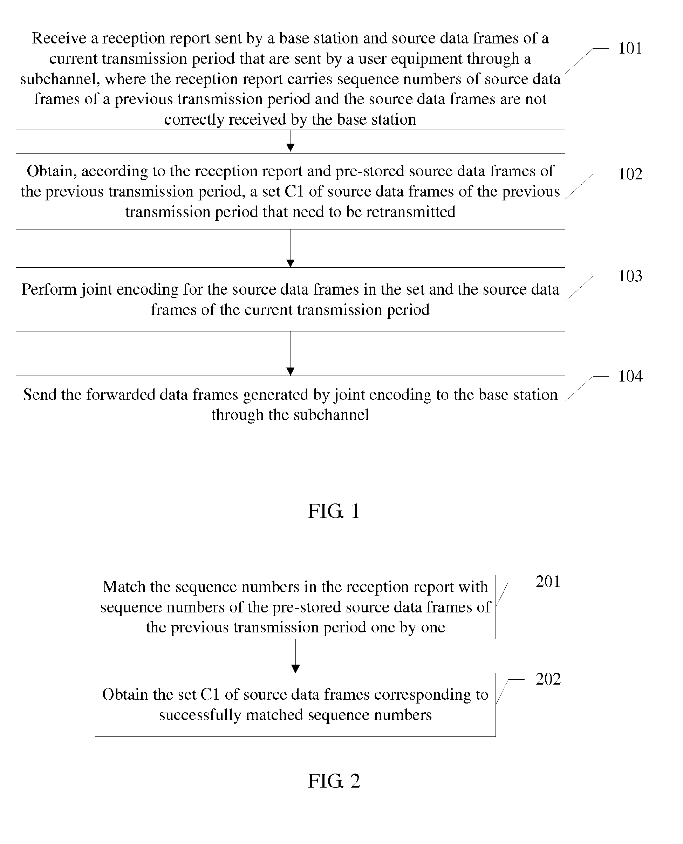

FIG. 1 is a flowchart of a data retransmission method according to a first embodiment of the present invention.

In the embodiment of the present invention, multiple user equipments exist in wireless orthogonal frequency division multiple access (Orthogonal Frequency Division Multiple Access, OFDMA), and the user equipments communicate with a base station through a relay station. In OFDMA mode, user equipments respectively occupy different subcarriers and perform sending on the selected timeslots; multiple subcarriers (a set of subcarriers) make up a subchannel. The user equipments send source data frames to the base station and relay station in a network. The data retransmission method based on orthogonal frequency division multiple access provided by the first embodiment of the present invention includes the following:

101. Receive a reception report sent by a base station and source data frames of a current transmission period that are sent by a user equipment through a subchannel, where the reception report carries sequence numbers of source data frames of a previous transmission period and the source data frames are not correctly received by the base station.

In the embodiment of the present invention, the relay station may first receive the reception report sent by the base station, and then receive the source data frames of the current transmission period that are sent by the user equipment through the subchannel. The reception report carries sequence numbers of source data frames of the previous transmission period and the source data frames are not correctly received by the base station.

In the embodiment of the present invention, the data frames sent by the user equipment to the base station and relay station are called source data frames, and the data frames forwarded by the relay station are called forwarded data frames. The relay station may respectively receive source data frames sent by different user equipments on multiple subchannels.

102. Obtain, according to the reception report and pre-stored source data frames of the previous transmission period, a set C1 of source data frames of the previous transmission period that need to be retransmitted.

Specifically, the relay station obtains, according to the sequence numbers of source data frames of the previous transmission period and the source data frames are not correctly received, in the reception report sent by the base station, and source data frames of the previous transmission period that are pre-stored by the relay station, a set C1 of source data frames of the previous transmission period that need to be retransmitted.

103. Perform joint encoding for the source data frames in the set and the source data frames of the current transmission period.

Specifically, after obtaining the set C1 of source data frames of the previous transmission period that need to be retransmitted, the relay station performs joint encoding for the source data frames in the set C1 and the source data frames of the current transmission period to generate forwarded data frames.

104. Send the forwarded data frames generated by joint encoding to the base station through the subchannel.

Specifically, the relay station sends the forwarded data frames generated by joint encoding to the base station through the subchannel in OFDMA.

After receiving the forwarded data frames, the base station demodulates and decodes the forwarded data frames to obtain the retransmitted source data frames of the previous transmission period.

In the embodiment of the present invention, the set C1 may include multiple source data frames. The relay station may execute the above steps 101 to 105 on each subchannel where the source data frames of the current transmission period are received, thereby sending the data frames, which need to be retransmitted, to the base station.

In the data retransmission method provided by the embodiment of the present invention, after obtaining the source data frames of the previous transmission period that need to be retransmitted, the relay station performs joint encoding for the source data frames that need to be retransmitted and the source data frames of the current transmission period, and sends the forwarded data frames generated by joint encoding to the base station through the subchannel, that is, the relay station simultaneously sends the source data frames of the previous transmission period and the source data frames of the current transmission period. Compared with the prior art, the embodiment of the present invention does not require additional timeslots to send data frames that need to be retransmitted, which does not affect data transmission of a next transmission period. Therefore, data transmission efficiency is high, a transmission delay is reduced, and system overheads are saved.

FIG. 2 is a flowchart of a method for a relay station to obtain a set C1 of source data frames of a previous transmission period that need to be retransmitted in a data retransmission method according to an embodiment of the present invention.

In the embodiment of the present invention, obtaining, by the relay station according to the reception report and the pre-stored source data frames of the previous transmission period, a set C1 of source data frames of the previous transmission period that need to be retransmitted (namely, the above step 103) may include the following:

     201. Match the sequence numbers in the reception report with sequence numbers of the pre-stored source data frames of the previous transmission period one by one.

Specifically, the relay station matches the sequence numbers in the reception report with sequence numbers of the pre-stored source data frames of the previous transmission period one by one. If the matching succeeds, step 202 is executed. If the matching fails, it indicates that no data frames that need to be retransmitted to the base station exist in the relay station.

202. Obtain the set C1 of source data frames corresponding to successfully matched sequence numbers.

The relay station obtains the set C1 of source data frames corresponding to successfully matched sequence numbers when the sequence numbers in the reception report match the sequence numbers of the pre-stored source data frames of the previous transmission period successfully.

It should be noted that only one embodiment of a method for obtaining a set C1 is provided above. Those skilled in the art may also use other manners to obtain the set C1 of source data frames of the previous transmission period that need to be retransmitted, for example, calculate an intersection of the set consisting of the sequence numbers in the reception report and the set consisting of the sequence numbers of the pre-stored source data frames of the previous transmission period to obtain the above set C1.

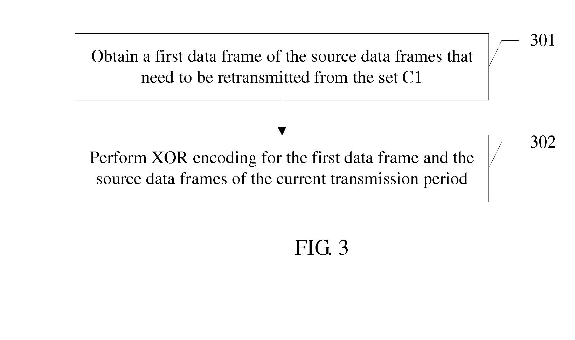

FIG. 3 is a flowchart of a method for performing joint encoding for the source data frames in the set C1 and the source data frames of the current transmission period in a data retransmission method according to an embodiment of the present invention.

In the embodiment of the present invention, the step (step 104) of performing joint encoding for the source data frames in the set C1 and the source data frames of the current transmission period may specifically include the following:

     301. Obtain a first data frame of the source data frames that need to be retransmitted from the set C1.

Specifically, the relay station can randomly obtain, from the set C1, a source data frame that needs to be retransmitted, where the source data frame is called a first data frame in the embodiment of the present invention.

302. Perform XOR encoding for the first data frame and the source data frames of the current transmission period.

Specifically, the relay station performs XOR encoding, namely, network encoding, for the first data frame and the source data frames of the current transmission period received through the above subchannel.

It should be noted that only one feasible joint encoding mode is provided above. Those skilled in the art may also use other joint encoding modes to encode the source data frames in the set C1 and the source data frames of the current transmission period.

In the embodiment of the present invention, performing XOR encoding for the source data frames in the set C1 and the source data frames of the current transmission period can enable the base station to perform simple decoding, according to the source data frames of the current transmission period and forwarded data frames after the base station receives the forwarded data frames generated by encoding, to obtain retransmitted data frames, and the implementation is simple.

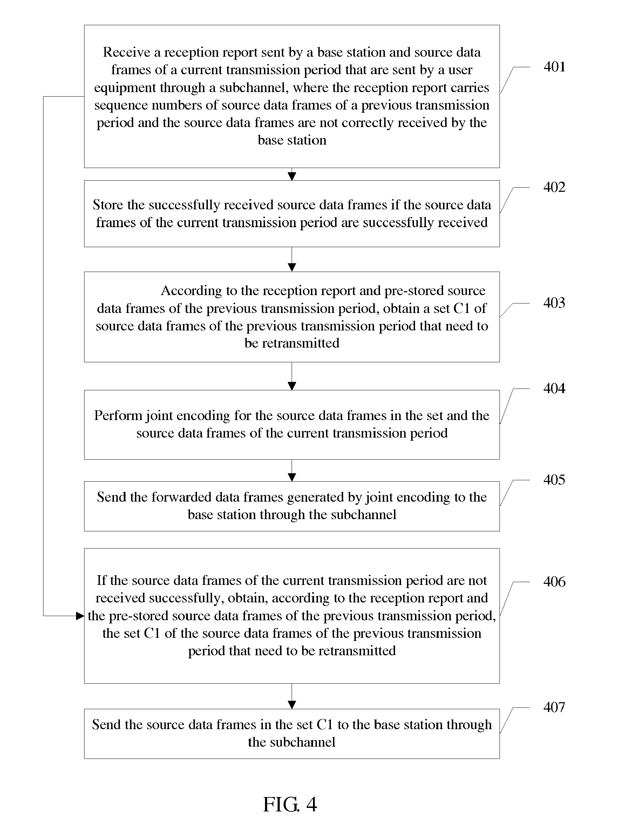

FIG. 4 is a flowchart of a data retransmission method according to a second embodiment of the present invention.

In the embodiment of the present invention, multiple user equipments exist in wireless orthogonal frequency division multiple access, and the user equipments communicate with a base station through a relay station. The user equipments send source data frames to the base station and relay station in a network. The data retransmission method based on orthogonal frequency division multiple access provided by the second embodiment of the present invention includes the following:

> 401. Receive a reception report sent by a base station and source data frames of a current transmission period that are sent by a user equipment through a subchannel, where the reception report carries sequence numbers of source data frames of a previous transmission period and the source data frames are not correctly received by the base station.

The execution process of step 401 in the second embodiment of the present invention is the same as that of step 101 in the first embodiment of the present invention, and is not further described herein. In the embodiment of the present invention, step 402 is executed after step 401.

402. Store the successfully received source data frames if the source data frames of the current transmission period are successfully received.

In the embodiment of the present invention, after receiving the source data frames of the current transmission period that are sent through the subchannel, the relay station demodulates and decodes the data frames, and in the demodulating and decoding process, determines whether the source data frames are successfully received. When the demodulating and decoding succeed, the relay station determines that the source data frames are successfully received, and stores the successfully received source data frames of the current transmission period for data retransmission of a next transmission period. The relay station may use cyclic redundancy check (Cyclic Redundancy Check, CRC) to determine whether the source data frames are successfully received.

403. According to the reception report and pre-stored source data frames of the previous transmission period, obtain a set C1 of source data frames of the previous transmission period that need to be retransmitted.

404. Perform joint encoding for the source data frames in the set C1 and the source data frames of the current transmission period.

405. Send forwarded data frames generated by joint encoding to the base station through the subchannel.

The execution process of steps 403 to 405 in the second embodiment of the present invention is the same as that of steps 102 to 104 in the first embodiment of the present invention, and is not further described herein.

The data retransmission method provided by the second embodiment of the present invention may further include the following:

> 406. If the source data frames of the current transmission period are not successfully received, obtain, according to the reception report and the pre-stored source data frames of the previous transmission period, the set C1 of the source data frames of the previous transmission period that need to be retransmitted.

Specifically, if the demodulating and decoding fail, the relay station determines that the source data frames of the current transmission period are not successfully received; the relay station obtains, according to the reception report and the pre-stored source data frames of the previous transmission period, the set C1 of the source data frames of the previous transmission period that need to be retransmitted.

After the set C1 of the source data frames of the previous transmission period that need to be retransmitted is obtained, step 407 is executed.

407. Send the source data frames in the set C1 to the base station through the subchannel.

Specifically, in the embodiment of the present invention, a source data frame in the set C1 can be obtained, and then the obtained source data frame is sent to the base station through the subchannel.

The base station receives the forwarded data frames sent by the relay station, and obtains the retransmitted source data frames according to the forwarded data frames.

In the second embodiment of the present invention, the set C1 may include multiple source data frames. The relay station may execute the above steps 402 to 405 or steps 406 to 407 on each subchannel where the source data frames of the current transmission period are received, thereby sending the data frames, which need to be retransmitted, to the base station.

In the second embodiment of the present invention, the successfully received source data frames stored by the relay station may be used for data retransmission of a next transmission period. The relay station obtains, according to the reception report of the base station on the source data frames of the current transmission period and according to the stored source data frames, source data frames that need to be retransmitted, and further performs data retransmission in the next transmission period.

In the data retransmission method provided by the second embodiment of the present invention, if the relay station correctly receives the data frames of the current transmission period, the relay station performs joint encoding for the source data frames that need to be retransmitted and the source data frames of the current transmission period, and sends the forwarded data frames generated by joint encoding to the base station through the subchannel, that is, the relay station simultaneously sends the source data frames of the previous transmission period and the source data frames of the current transmission period. In addition, if the relay station correctly receives the data frames of the current transmission period, the relay station sends the source data frames, which need to be retransmitted, to the base station through the subchannel.

Compared with the prior art, the embodiment of the present invention does not require additional timeslots to send data frames that need to be retransmitted, which does not affect data transmission of the next transmission period. Therefore, data transmission efficiency is high, a transmission delay is reduced, and system overheads are saved.

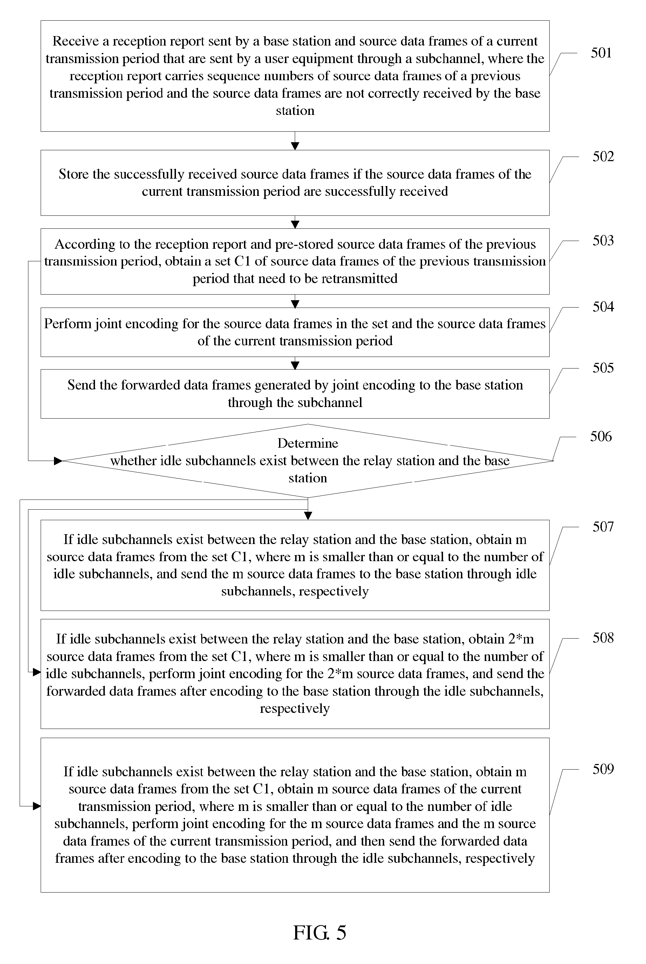

FIG. 5 is a flowchart of a data retransmission method according to a third embodiment of the present invention.

In the embodiment of the present invention, multiple user equipments exist in wireless orthogonal frequency division multiple access, and the user equipments communicate with a base station through a relay station. The user equipments send source data frames to the base station and relay station in a network. The data retransmission method based on orthogonal frequency division multiple access provided by the third embodiment of the present invention includes the following:

501. Receive a reception report sent by a base station and source data frames of a current transmission period that are sent by a user equipment through a subchannel, where the reception report carries sequence numbers of source data frames of a previous transmission period and the source data frames are not correctly received by the base station.

502. Store the successfully received source data frames if the source data frames of the current transmission period are successfully received.

503. According to the reception report and pre-stored source data frames of the previous transmission period, obtain a set C1 of source data frames of the previous transmission period that need to be retransmitted.

504. Perform joint encoding for the source data frames in the set C1 and the source data frames of the current transmission period.

505. Send the forwarded data frames generated by joint encoding to the base station through the subchannel.

The execution process of steps 501 to 505 in the third embodiment of the present invention is the same as that of steps 201 to 205 in the second embodiment of the present invention, and is not further described herein.

In the data retransmission method provided by the third embodiment of the present invention, after the relay station obtains, according to the reception report and pre-stored source data frames of the previous transmission period, a set C1 of source data frames of the previous transmission period that need to be retransmitted, the relay station may further execute the following steps:

506. Determine whether idle subchannels exist between the relay station and the base station.

Specifically, the relay station determines whether idle subchannels exist between the relay station and the base station, and if so, step 507 or 508 or 509 is executed, or otherwise, the process ends.

507. If idle subchannels exist between the relay station and the base station, obtain m source data frames from the set C1, where m is smaller than or equal to the number of idle subchannels, and send the m source data frames to the base station through idle subchannels, respectively.

Specifically, if the relay station determines that idle subchannels exist, the relay station randomly selects m source data frames from the set C1, where m is smaller than or equal to the number of idle subchannels. The relay station sends the m obtained source data frames to the base station through idle subchannels, respectively, so that the base station receives the retransmitted data frames from the idle subchannels.

508. If idle subchannels exist between the relay station and the base station, obtain 2*m source data frames from the set C1, where m is smaller than or equal to the number of idle subchannels, perform joint encoding for the 2*m source data frames, and send the forwarded data frames after encoding to the base station through the idle subchannels, respectively.

Specifically, if the relay station determines that idle subchannels exist, the relay station obtains 2*m source data frames from the set C1 where m is smaller than or equal to the number of idle subchannels, and performs joint encoding for the 2*m source data frames. The relay station selects m groups of source data frames from 2*m source data frames, where the number of source data frames in each group of source data frames is 2, and then performs joint encoding for each group of source data frames, so as to further generate m forwarded data frames.

The relay station sends the forwarded data frames generated after encoding to the base station through idle subchannels, respectively, so that the base station receives the forwarded data frames from the idle subchannels, and demodulates and decodes the forwarded data frames to obtain the data frames retransmitted by the relay station.

509. If idle subchannels exist between the relay station and the base station, obtain m source data frames from the set C1, obtain m source data frames of the current transmission period, where m is smaller than or equal to the number of idle subchannels, perform joint encoding for the m source data frames and the m source data frames of the current transmission period, and then send the forwarded data frames after encoding to the base station through the idle subchannels, respectively.

Specifically, if the relay station determines that idle subchannels exist, the relay station obtains m source data frames from the set C1 and obtains m source data frames of the current transmission period, and performs joint encoding for the m source data frames and m source data frames of the current transmission period. The source data frames of the current transmission period are received through subchannels, where m is smaller than or equal to the number of idle subchannels, the m source data frames obtained from the set C1 constitute a set C2, and the m source data frames of the current transmission period constitute a set C3.

The relay station may perform joint encoding for elements in the set C2 and set C3, for example, randomly obtaining a data frame from the set C2 and a data frame from the set C3, and calculating the intersection of the two data frames, to generate a forwarded data frame.

The relay station generates m forwarded data frames after encoding is completed. The relay station sends the forwarded data frames generated after encoding to the base station through idle subchannels, respectively, so that the base station receives the forwarded data frames from the idle subchannels, and demodulates and decodes the forwarded data frames to obtain the data frames retransmitted by the relay station.

It should be noted that the relay station in the data transmission method provided by the embodiment of the present invention may transmit, on the idle subchannels, data frames that need to be retransmitted, or forwarded data frames generated by performing joint encoding for the data frames that need to be retransmitted and data frames of the current transmission period; the relay station may also send the data frames of the current transmission period on the idle subchannels, so that the base station may receive the data frames of the current transmission period on more subchannels, thereby enhancing the probability of correctly decoding data frames of the current transmission period by the base station.

In the data retransmission method provided by the embodiment of the present invention, if the relay station correctly receives the data frames of the current transmission period, the relay station performs joint encoding for the source data frames that need to be retransmitted and the source data frames of the current transmission period, and sends the forwarded data frames generated by joint encoding to the base station through the subchannel, that is, the relay station simultaneously sends the source data frames of the previous transmission period and the source data frames of the current transmission period. In addition, if idle subchannels exist between the relay station and the base station, the relay station sends source data frames, which need to be retransmitted, to the base station through the subchannels.

Compared with the prior art, the embodiment of the present invention does not require additional timeslots to send data frames that need to be retransmitted, which does not affect data transmission of a next transmission period, and therefore, data transmission efficiency is high. In addition, because the data frames that need to be retransmitted may be retransmitted on multiple subchannels, a certain diversity effect can be achieved, thereby improving reliability of data retransmission.

The above describes the data retransmission method provided by the embodiment of the present invention from the aspect of the relay station. The following describes a data retransmission method provided by an embodiment of the present invention from the aspect of a base station.

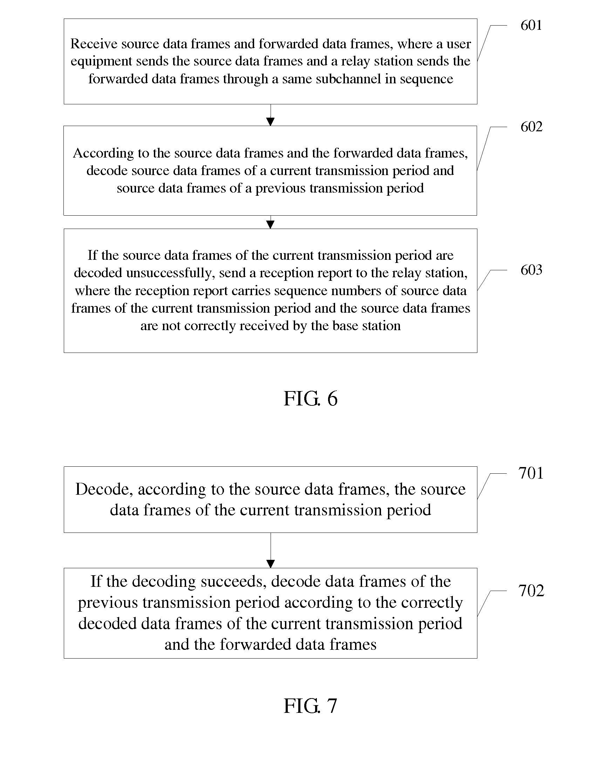

FIG. 6 is a flowchart of a data retransmission method according to a fourth embodiment of the present invention.

In the embodiment of the present invention, multiple user equipments exist in wireless orthogonal frequency division multiple access, and the user equipments communicate with a base station through a relay station. The user equipments send source data frames to the base station and relay station in a network. The data retransmission method based on orthogonal frequency division multiple access provided by the fourth embodiment of the present invention includes the following:

The data retransmission method provided by the fourth embodiment of the present invention includes the following:

601. Receive source data frames and forwarded data frames, where a user equipment sends the source data frames and a relay station sends the forwarded data frames through a same subchannel in sequence.

Specifically, the base station first receives the source data frames sent by the user equipment, and then receives the forwarded data frames sent by the relay station.

In the embodiment of the present invention, the data frames sent by the user equipment to the base station and relay station are called source data frames, and the data frames forwarded by the relay station are called forwarded data frames. The base station may respectively receive source data frames sent by different user equipments on multiple subchannels.

602. According to the source data frames and the forwarded data frames, decode source data frames of a current transmission period and source data frames of a previous transmission period.

Specifically, the base station decodes, according to the received source data frames and forwarded data frames, the source data frames of the current transmission period and source data frames of the previous transmission period.

In the embodiment of the present invention, if the forwarded data frames received by the base station are source data frames of the previous transmission period, that is, the forwarded data frames are not data frames generated after joint decoding, the base station independently decodes, according to the source data frames, the source data frames of the current transmission period, and independently decodes, according to the forwarded data frames, the source data frames of the previous transmission period.

603. If the source data frames of the current transmission period are decoded unsuccessfully, send a reception report to the relay station, where the reception report carries sequence numbers of source data frames of the current transmission period and the source data frames are not correctly received by the base station.

Specifically, if the base station fails to decode the source data frames of the current transmission period, it indicates that the relay station is needed to perform retransmission. The base station sends a reception report to the relay station, where the reception report carries sequence numbers of source data frames of the current transmission period and the source data frames are not correctly received by the base station.

The reception report may be specifically a negative acknowledgement (Negative Acknowledgement, NACK) message. After the relay station receives the reception report sent by the base station and receives the data frames of a next period sent by the user equipment, the relay station performs joint encoding for the data frames that need to be retransmitted and the data frames of the next period, and then sends forwarded data frames generated by joint encoding to the base station, so that the base station can decode the forwarded data frames to obtain the data frames that need to be retransmitted.

In the embodiment of the present invention, if the base station successfully decodes the source data frames of the previous transmission period, that is, obtains correctly retransmitted data frames by demodulating and decoding, the base station stores the correctly decoded source data frames of the previous transmission period.

In the embodiment of the present invention, the base station decodes, according to the source data frames and the forwarded data frames, source data frames of the current transmission period and source data frames of the previous transmission period to obtain transmitted data frames of the previous transmission period. If the base station decodes source data frames of the current transmission period unsuccessfully, the base station sends a reception report to the relay station, so that the relay station retransmits the unsuccessfully decoded source data frames to the base station according to the reception report. Compared with the prior art, during data retransmission in the embodiment of the present invention, the relay station does not require additional timeslots to send data frames that need to be retransmitted, which does not affect data transmission of a next transmission period. Therefore, data transmission efficiency is high, a transmission delay is reduced, and system overheads are saved.

FIG. 7 is a flowchart of a method for decoding, according to source data frames and forwarded data frames, source data frames of a current transmission period and source data frames of a previous transmission period in a data retransmission method according to the fourth embodiment of the present invention.

In the embodiment of the present invention, the base station decodes, according to the source data frames and the forwarded data frames, source data frames of the current transmission period and source data frames of the previous transmission period, which may specifically include the following:

701. Decode, according to the source data frames, the source data frames of the current transmission period.

Specifically, the base station decodes source data frames of the current transmission period according to the source data frames that are sent by the user equipment through a subchannel; if the decoding succeeds, step 702 is executed.

702. If the decoding succeeds, decode data frames of the previous transmission period according to the correctly decoded data frames of the current transmission period and the forwarded data frames.

Specifically, after successfully decoding the data frames of the current transmission period, the base station further decodes the data frames of the previous transmission period according to the correctly decoded data frames of the current transmission period and the forwarded data frames. If the decoding succeeds, the base station stores the correctly decoded data frames of the previous transmission period. If the data frames of the previous transmission period are decoded unsuccessfully, the base station discards the data frames of the previous transmission period that fail to be correctly decoded, and considers that the data frames are lost.

In the embodiment of the present invention, the forwarded data frames received by the base station are generated by performing joint encoding for data frames of the current transmission period and data frames of the previous transmission period. Therefore, the base station decodes the data frames of the previous transmission period according to the correctly decoded data frames of the current transmission period and the forwarded data frames.

In the embodiment of the present invention, if the base station incorrectly receives data frames of only one user equipment in the previous transmission period, when the relay station forwards data frames of the current transmission period, the relay station forwards the data frames on each subchannel. Therefore, as long as the data frames of one user equipment can be correctly decoded by the base station, retransmitted data frames can be correctly decoded by decoding information of the subchannel corresponding to the relay station, and data forwarding on other subchannels of the relay station is not affected.

If the base station incorrectly receives data frames of two user equipments in the previous transmission period, in a probability sense, the relay station may forward one of the data frames on a half of subchannels. Likewise, if the user equipment can decode data frames of any user equipment on the subchannels, the user equipment can correctly decode the retransmitted data frames.

Usually, there are only a few data frames that need to be retransmitted to the base station. Therefore, the embodiment of the present invention can achieve a good effect, and the user equipment or relay station does not need to waste a frame dedicated for retransmission. The embodiment of the present invention can reduce the time for the base station to wait for retransmission without affecting transmission of new user data of a next transmission period, thereby improving reliability and accuracy of data transmission in the system, reducing a transmission delay, and saving system overheads. In addition, because the data frames that need to be retransmitted may be retransmitted on multiple subchannels, a certain diversity effect can be achieved, so as to improve reliability of data retransmission.

To make the embodiment of the present invention more comprehensible, the following further provides a specific application scenario of a data retransmission method provided by a fifth embodiment of the present invention.

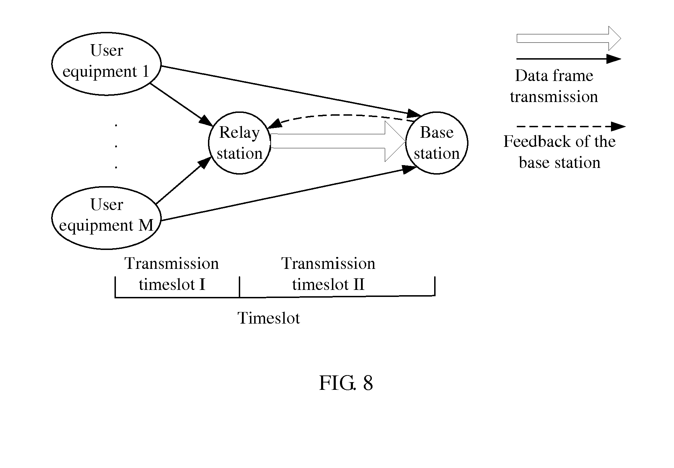

FIG. 8 is an application scenario diagram of a data retransmission method according to the fifth embodiment of the present invention.

In the application scenario, M source nodes (user equipments) exist in an OFDMA relay system, and communicate with a common destination node (base station) with assistance of a relay station node, where the system passes through a multipath fading channel. In the assumed uplink communication link, the whole bandwidth is divided into N subchannels (N > M). A half duplex mode is used in a transmission process. The whole transmission process is divided into two timeslots for processing. In a first timeslot, a user equipment sends data frames, and both the relay station and the base station can monitor and receive data; in a second timeslot, the relay station forwards the data frames of the user equipment to the base station according to a policy. After the transmission process of a transmission period ends, the base station can perform feedback to the relay station (the feedback is error-free), and send a reception report.

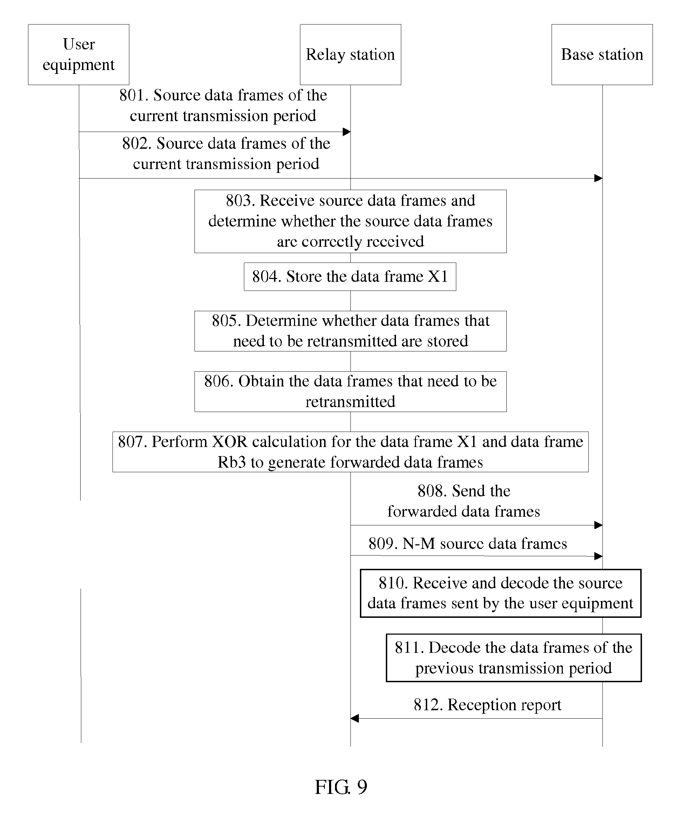

FIG. 9 is a flowchart of a data retransmission method according to the fifth embodiment of the present invention.

The data retransmission method provided by the fifth embodiment of the present invention may include the following:

>     801 to 802. A user equipment sends source data frames of the current transmission period to a relay station and a base station.

In the first timeslot, the user equipment 1 transmits an encoded and modulated source data frame X1 on the subchannel S1 corresponding to the user equipment 1. In the embodiment of the present invention, the set of source data frames in the current transmission period is defined as $X = \{X1 ..., Xm\}$. Both the base station and the relay station can monitor the data sent by the use equipment on each subchannel. The embodiment of the present invention is described by using an example in which the base station and the relay station process the data frames received on the subchannel S1.

803. The relay station receives, on the subchannel S1, the source data frame X1 sent by the user equipment, and determines whether the data frame X1 is correctly received.

Specifically, the relay station monitors the data frame sent by the user equipment on the subchannel S1 and receives the data frame X1. Upon completion of reception, the relay station determines whether the data frame X1 is correctly received. In the embodiment of the present invention, the relay station can correctly receive the data frame X1, and executes step 804.

804. The relay station stores the data frame X1.

Specifically, the relay station stores the data frames that are correctly received on each subchannel. In the embodiment of the present invention, the set of data frames of the current transmission period that can be correctly received by the relay station is defined as Rn, where $R \subseteq X$.

The relay station in the embodiment of the present invention stores source data frames of two consecutive transmission periods (source data frames of the current transmission period and the previous transmission period).

805. The relay station determines, according to the reception report, whether data frames that need to be retransmitted are stored.

In the embodiment of the present invention, the set of sequence numbers of source data frames of the previous transmission period and the source data frames are not correctly received by the base station is called Db, where the sequence numbers are carried in the reception report. The set of data frames of the previous transmission period that are stored in the relay station is called Rb.

The relay station determines, according to the set Db and set Rb, whether the relay station stores data that needs to be retransmitted. The relay station can match the sequence numbers of data frames in the set Db with those in the set Rb one by one; if the matching succeeds, it indicates that the relay station stores data frames that need to be retransmitted; otherwise, it is determined that no data frames that need to be retransmitted exist in the relay station. The relay station can also calculate an intersection of the set Db and set Rb; if the intersection is null, it indicates that the relay station stores data frames that need to be retransmitted; otherwise, it is determined that no data frames that need to be retransmitted exist in the relay station.

In the embodiment of the present invention, it is determined that data frames of the previous transmission period that need to be retransmitted exist in the relay station, and the relay station executes step 806. If it is determined that no data frames that need to be retransmitted exist in the relay station, the relay station directly forwards the correctly received data frames of the current transmission period. The set of data frames that need to be retransmitted in the relay station is C1.

806. The relay station obtains the data frames that need to be retransmitted.

In the embodiment of the present invention, the relay station obtains a data frame that needs to be retransmitted from the set C1 for each subchannel. Specifically, the relay station may also obtain the data frames that need to be retransmitted from the set C1. For example, for the subchannel S1, the retransmitted data frame obtained is Rb3.

807. The relay station performs XOR calculation for the data frame X1 and data frame Rb3 to generate forwarded data frames.

Specifically, the relay station performs XOR calculation for the data frame X1 and data frame Rb3 received on the S1 channel to generate forwarded data frames.

808. The relay station sends the forwarded data frames generated by joint encoding to the base station on the subchannel S 1.

In the embodiment of the present invention, the relay station forwards the data frames, which need to be retransmitted, to the base station on all subchannels on which data frames are received, so that all the data frames in the set C1 can be retransmitted to the base station.

In addition, in the embodiment of the present invention, because the number N of subchannels is greater than the number M of user equipments, idle subchannels exist in the system. The relay station in the embodiment of the present invention further executes step 809.

809. Obtain N-M source data frames from the set C1, and sends the N-M source data frames to the base station through idle subchannels, respectively.

In the embodiment of the present invention, the relay station randomly obtains N-M source data frames from the set C1, namely, N-M data frames that need to be retransmitted. The relay station further sends the N-M source data frames to the base station through idle subchannels, respectively, that is, sends a different source data frame on each subchannel.

It should be noted that the relay station in the embodiment of the present invention may also obtain 2*(N-M) source data frames from the set C1, then perform joint encoding for the 2*(N-M) source data frames, and send the forwarded data frames after encoding to the base station through idle subchannels, respectively. In addition, the relay station may obtain (N-M) source data frames from the set C1, obtain (N-M) source data frames of the current transmission period, then perform joint encoding for the (N-M) source data frames and the (N-M) source data frames of the current transmission period, and then send the forwarded data frames after encoding to the base station through idle subchannels, respectively. For the process of using idle subchannels by the base station, reference may be made to the description of the third embodiment of the data retransmission method, and no repeated description is provided herein.

In the embodiment of the present invention, the relay station may also forward correctly received data frames of the current transmission period to the base station on idle subchannels, so that the base station can receive the data frames of the current transmission period not only through the user equipment but also through the relay station. Even if the link from the user to the base station is not good, the base station may also obtain the data frames of the current transmission period from the relay station.

Steps 803 to 809 are execution processes on the relay station. The following further provides the execution process on the base station. It should be noted that the execution process on the relay station may be concurrent with the execution process on the base station.

810. The base station receives, on the subchannel S1, the source data frames sent by the user equipment, and decodes the source data frames.

Specifically, the source data frames sent by the user equipment may also be not forwarded by the relay station, but are directly received by the base station, and the base station decodes the source data frames of the current transmission period according to the received source data frames.

If the decoding succeeds, the base station stores the correctly decoded data frames of the current transmission period, and executes step 811. If the decoding fails, the base station executes step 812.

811. Successfully decode the source data frames of the current transmission period, further decode the data frames of the previous transmission period according to the correctly decoded data frames of the current transmission period and the forwarded data frames.

In the embodiment of the present invention, the forwarded data frames sent by the relay station are generated by performing XOR calculation for the data frames of the current transmission period and the data frames of the previous transmission period. Therefore, the base station decodes the data frames of the previous transmission period according to the correctly decoded data frames of the current transmission period and the forwarded data frames; if the base station decodes the data frames of the previous transmission period successfully, the base station stores the correctly decoded data frames of the previous transmission period; otherwise, the base station discards the forwarded data frames.

812. Decode the source data frames of the current transmission period unsuccessfully, and send a reception report to the relay station, where the reception report carries sequence numbers of source data frames of the current transmission period and the source data frames are not correctly received by the base station.

Specifically, if the relay station decodes the source data frames of the current transmission period unsuccessfully, it sends a NACK to the relay station, indicating that the data frames of the current transmission period are decoded unsuccessfully, so that the relay station retransmits the unsuccessfully decoded data frames when transmitting the data frames of the next transmission period.

In the data retransmission method provided by the embodiment of the present invention, if the relay station determines, when executing step 804, that the data frame X1 is not correctly received, the relay station continues to obtain, according to the reception report and the pre-stored source data frames of the previous transmission period, the set C1 of source data frames of the previous transmission period that need to be retransmitted, and then sends a source data frame in the set C1 to the base station through the subchannel S1. After receiving the forwarded data frames, the base station can obtain the data frames, which are retransmitted by the relay station, by independently decoding the forwarded data frames.

For further understanding the beneficial effect of the data retransmission method provided by the embodiment of the present invention against the prior art, the following provides the specific simulation result of the embodiment of the present invention.

1. Comparison with an ordinary network encoding protocol under a binary channel condition.

Assuming that a simple binary channel condition is considered, each communication link has the p probability of correctly transmitting data frames and the 1-p probability of packet loss. It is assumed that quality of the channel between the user equipment and the relay station is ideal and is error-free. Two subchannels in the system are available for transmission. The transmission interruption probability in the method mentioned in the embodiment of the present invention is compared with the transmission interruption probability of the ordinary network encoding protocol under a system model having two user equipments, one relay station, and one base station (it is considered that interruption occurs if data frames of one user equipment are not correctly received by the base station).

The data transmission method of the ordinary network encoding protocol is specifically: In a first timeslot, the user equipments send data frames on their respective allocated subchannels; in a second timeslot, the relay station transmits two correctly decoded data frames of the current transmission period to the base station on two subchannels. In the second timeslot, the relay station does not retransmit the data frames that need to be retransmitted, and the base station performs decoding according to the data frames obtained by a user and the relay station.

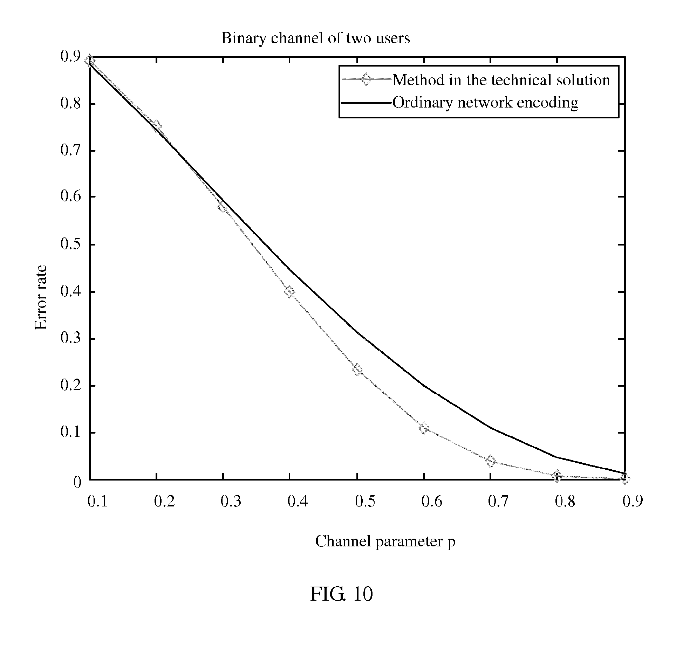

FIG. 10 is a simulation diagram for comparing performance between a data retransmission method in an embodiment of the present invention and a data retransmission method in the prior art. As seen from FIG. 10, the data retransmission method provided by the embodiment of the present invention has a smaller interruption probability than an ordinary network encoding solution.

2. Comparison between the data retransmission method in the embodiment of the present invention and the data retransmission method in the prior art.

A model having multiple users, a single relay station, and a single base station is considered. Assuming that M users exist in a system and occupy M OFDM subchannels for transmitting data. The relay station uses a decode-and-forward (Decode-and-Forward, DF) mode. Both the relay station and the base station can demodulate and decode received data frames, and determine whether the data frames are correctly received, which may be implemented by cyclic redundancy check (Cyclic Redundancy Check, CRC). The relay station and the base station can also use other check methods to determine whether source data frames are successfully received.

The whole process of data transmission between a user equipment and a base station may be divided into four parts: transmission, relay, feedback, and retransmission:

(1) In a first timeslot, the user equipment transmits encoded and modulated data frames on the subchannel corresponding to the user equipment. Both the base station and the relay station can monitor the data frames sent by a user on each subchannel, and meanwhile can obtain channel state information of the channel.

(2) In a second timeslot, if the relay station correctly decodes data frames sent by some user equipments, the relay station performs relay transmission on a subchannel corresponding to a user equipment, that is, forwards the correctly decoded data frames to the base station. The relay station feeds back its own decoding situation to the user equipment through a reception report.

(3) The base station decodes the received data frames (separately decodes the data sent by the user equipment and the data sent by the relay station), and then feeds back the decoding situation to the user equipment and relay station through a reception report.

(4) When the feedback result is that the base station correctly decodes all user data, the relay station discards stored user data. Each user transmits new packets and starts a new transmission period. As long as the base station does not correctly decode the data frames sent by the user equipment, the user equipment does not transmit new data frames in a next transmission period but waits for the relay station to retransmit data.

The embodiment of the present invention considers two data retransmission methods in the prior art:

In one data retransmission method, in a transmission timeslot, for a data frame requested to be retransmitted to the base station, if the relay station correctly decodes the data frame, the relay station generates an additional redundant frame, and retransmits the additional redundant frame on the subchannel corresponding to the user equipment. Otherwise, the user equipment may also learn that the relay station does not correctly receive the data frame that needs to be retransmitted, and in this case, the user equipment retransmits the data frame on the subchannel corresponding to the user equipment. For the user equipments that do not need retransmission, the timeslot is idle, that is, no data frame is sent.

In another data retransmission method, the retransmission process is still performed in two timeslots. In the first timeslot, if the user equipment finds that the base station does not correctly receive the data frames sent by the user equipment, the user equipment retransmits the data frames on the subchannel corresponding to the user equipment. For the user equipments that do not need retransmission, the timeslot is idle. In the next timeslot, the relay station compares the correctly received data frames that are retransmitted by the user equipment with the data frames received in the previous transmission period, obtains, according to the reception report, the data frame that the relay station can decode and the base station requests to retransmit, generates an additional redundant frame according to the data frame, and then sends the additional redundant frame on the subchannel corresponding to the user equipment.

(6) The base station decodes the received data frames again (separately decodes a data frame sent by the user equipment and a data frame sent by the relay station) to obtain retransmitted data frames.

Comparing the throughput of the data retransmission method in the embodiment of the present invention with the throughput of the two cooperative ARQ transmission solutions, an OFDMA single relay network having 20 user equipments is considered for use, where the data length transmitted by each user is 100 bits. System bandwidth is evenly divided into 20 subchannels. When the user equipment transmits data on a multipath Rayleigh fading channel (assuming 3-path), the channel encoding mode used is low density generator matrix (Low Density Generator Matrix, LDGM). The generator matrix of low-density parity-check (Low-Density Parity-Check, LDPC) codes is simple, and is easy to implement. In the embodiment of the present invention, (100, 200) LDGM codes with a 0.5 coding rate is considered for use, its density is 9 and its code length is 200.

The throughput of a communication system may be expressed as:

$$T = St * (1 - a\%)/Sa$$

In the formula, St indicates the number of timeslots required by a user to correctly transmit a certain number of data frames; Sa is the number of timeslots during actual transmission of packets; a% is a frame error rate, that is, the probability of incorrectly transmitting data frames.

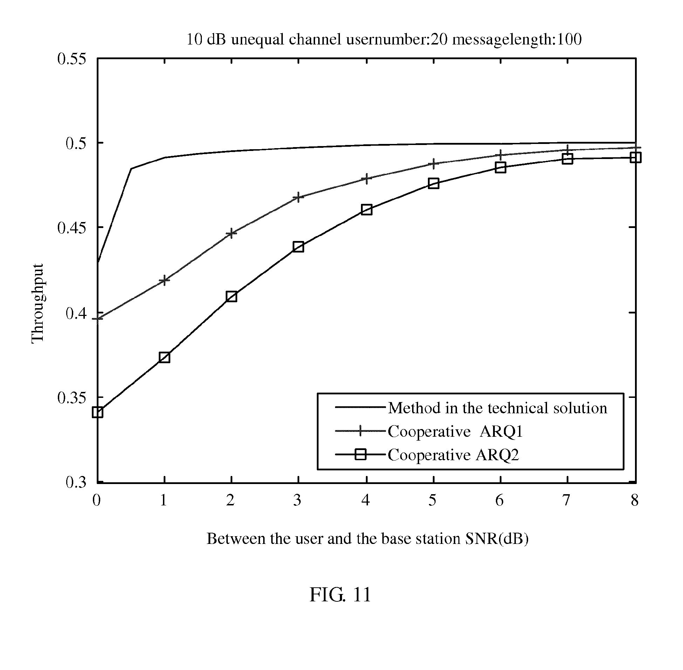

FIG. 11 is a schematic simulation diagram of throughput of a data retransmission method in an embodiment of the present invention and throughput of a data retransmission method in the prior art.

The throughput is jointly decided by a frame error rate and used transmission timeslots on a compromise basis. From the aspect of transmission timeslots, the data retransmission method provided by the embodiment of the present invention does not require additional retransmission timeslots; in the prior art, the first cooperative ARQ method requires a retransmission timeslot (called a cooperative ARQ1), and the second cooperative ARQ method requires two retransmission timeslots (called a cooperative ARQ2). A simulation comparison result is shown in FIG. 10.

In this embodiment, quality of the channel from a user to a relay station and the channel from the relay station to a base station is better (10 dB higher) than quality of the channel from the user to the base station. In the figure, the X axis indicates the signal to noise ratio SNR of transmission from the user to the base station, and the Y axis indicates throughput. As seen from the figure, the system throughput of the data retransmission method in the prior art is smaller than the system throughput of the data retransmission method provided by the embodiment of the present invention.

The above describes the data retransmission method provided by the embodiment of the present invention in detail. Embodiments of the present invention also provide a base station, a relay station, and a communication system corresponding to the method embodiments.

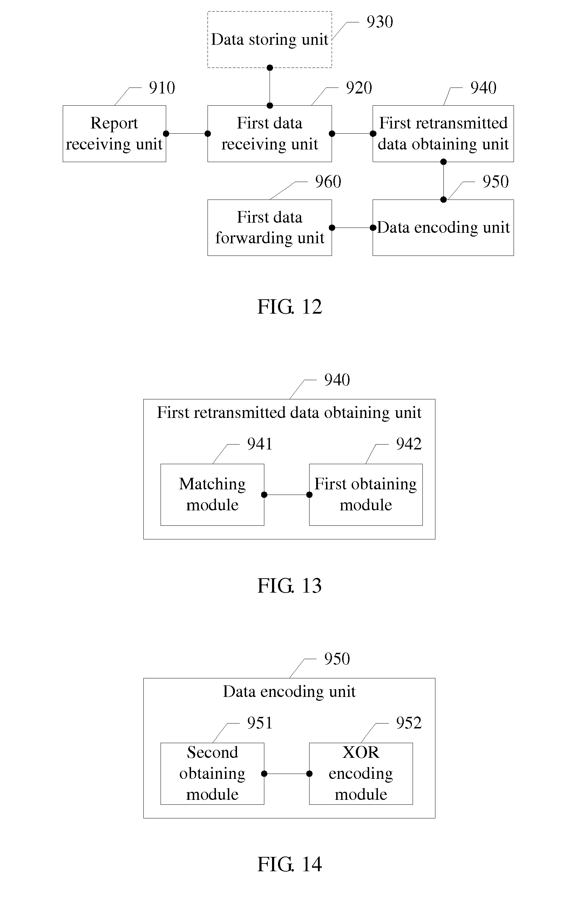

FIG. 12 is a schematic structural diagram of a relay station according to a sixth embodiment of the present invention.

The relay station provided by the embodiment of the present invention includes:

a report receiving unit 910, configured to receive a reception report sent by a base station, where the reception report carries sequence numbers of source data frames of a previous transmission period and the source data frames are not correctly received by the base station;
a first data receiving unit 920, configured to receive source data frames of a current transmission period that are sent by a user equipment through a subchannel;
a first retransmitted data obtaining unit 940, configured to obtain, according to the reception report and pre-stored source data frames of the previous transmission period, a set C1 of source data frames of the previous transmission period that need to be retransmitted;
a data encoding unit 950, configured to perform joint encoding for the source data frames in the set C1 and the source data frames of the current transmission period; and
a first data forwarding unit 960, configured to send forwarded data frames generated by joint encoding to the base station through the subchannel.

The relay station provided by the sixth embodiment of the present invention may be used in the corresponding first method embodiment.

In the relay station provided by the embodiment of the present invention, the first retransmitted data unit 940 obtains, according to the reception report and pre-stored source data frames of the previous transmission period, a set C1 of source data frames of the previous transmission period that need to be retransmitted; then the data encoding unit 950 performs joint encoding for the source data frames that need to be retransmitted and the source data frames of the current transmission period; and the first data forwarding unit 960 sends the forwarded data frames generated by joint encoding to the base station through the subchannel, that is, the relay station simultaneously sends source data frames of the previous transmission period and source data frames of the current transmission period. Compared with the prior art, during data retransmission in the embodiment of the present invention, no additional timeslots are required to send data frames that need to be retransmitted, which does not affect data transmission of a next transmission period, and therefore, data transmission efficiency is high.

Further, the relay station provided by the sixth embodiment of the present invention may include:

a data storing unit 930, configured to store source data frames of the current transmission period if the source data frames of the current transmission period are successfully received.

In the embodiment of the present invention, the successfully received source data frames stored by the data storing unit 930 may be used for data retransmission of a next transmission period. The relay station obtains, according to the reception report of the base station on the source data frames of the current transmission period and according to the stored source data frames, source data frames that need to be retransmitted, and further performs data retransmission in the next transmission period.

FIG. 13 is a schematic structural diagram of a first retransmitted data obtaining unit in a base station according to an embodiment of the present invention.

In the relay station provided by the sixth embodiment of the present invention, the first retransmitted data obtaining unit 940 may specifically include:

a matching module 941, configured to match the sequence numbers in the reception report with sequence numbers of the pre-stored source data frames of the previous transmission period one by one; and
a first obtaining module 942, configured to obtain the set C1 of source data frames corresponding to successfully matched sequence numbers.

It should be noted that only one embodiment of a functional module of the first retransmitted data obtaining unit is provided above. Those skilled in the art may also use other manners to obtain the set C1 of source data frames of the previous transmission period that need to be retransmitted, for example, calculate an intersection of the set consisting of the sequence numbers in the reception report and the set consisting of the sequence numbers of the pre-stored source data frames of the previous transmission period, and further, the first retransmitted data obtaining unit has the corresponding functional module.

FIG. 14 is a schematic structural diagram of a data encoding unit in a relay station according to the sixth embodiment of the present invention.

In the relay station provided by the embodiment of the present invention, the data encoding unit 950 may specifically include:

a second obtaining module 951, configured to obtain, from the set C1, a first data frame of the source data frames that need to be retransmitted; and
an XOR encoding module 952, configured to perform XOR encoding for the first data frame and the source data frames of the current transmission period.

In the embodiment of the present invention, the XOR encoding module 952 performs XOR encoding for the first data frame and the source data frames of the current transmission period to generate forwarded data frames, so that the base station receiving the forwarded data frames decodes, according to the source data frames of the current transmission period and the forwarded data frames, the retransmitted data frames. The decoding mode is simple and efficiency is high.

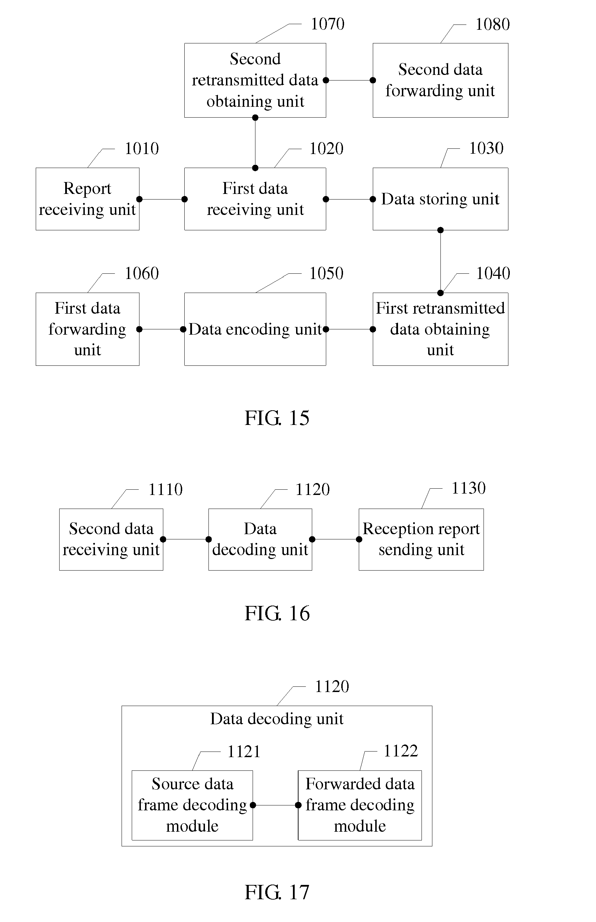

FIG. 15 is a schematic structural diagram of a relay station according to a seventh embodiment of the present invention.

The relay station provided by the seventh embodiment of the present invention includes:

a report receiving unit 1010, configured to receive a reception report sent by a base station, where the reception report carries sequence numbers of source data frames of a previous transmission period and the source data frames are not correctly received by the base station;
a first data receiving unit 1020, configured to receive source data frames of a current transmission period that are sent by a user equipment through a subchannel;
a data storing unit 1030, configured to store source data frames of the current transmission period if the source data frames of the current transmission period are successfully received;
a first retransmitted data obtaining unit 1040, configured to obtain, according to the reception report and pre-stored source data frames of the previous transmission period, a set C1 of source data frames of the previous transmission period that need to be retransmitted;
a data encoding unit 1050, configured to perform joint encoding for the source data frames in the set C1 and the source data frames of the current transmission period; and

a first data forwarding unit 1060, configured to send forwarded data frames generated by joint encoding to the base station through the subchannel.

The relay station provided by the seventh embodiment of the present invention further includes: a second retransmitted data obtaining unit 1070 and a second data forwarding unit 1080.

The second retransmitted data obtaining unit 1070 is configured to: if the source data frames of the current transmission period fail to be received, obtain, according to the reception report and the pre-stored source data frames of the previous transmission period, the set C1 of the source data frames of the previous transmission period that need to be retransmitted.

It should be noted that the first retransmitted data obtaining unit 1040 and the second retransmitted data obtaining unit 1070 in the embodiment of the present invention may be a same unit in specific implementation. The embodiment of the present invention provides different names for units having the same function only according to different execution environments.

The second data forwarding unit 1080 is configured to send the source data frames in the set C1 to the base station through the subchannel.

In the relay station provided by the seventh embodiment of the present invention, if the relay station correctly receives the data frames of the current transmission period, the data encoding unit 1050 performs joint encoding for the source data frames that need to be retransmitted and the source data frames of the current transmission period, and then the first data forwarding unit 1060 sends the forwarded data frames generated by joint encoding to the base station through the subchannel, that is, the relay station simultaneously sends the source data frames of the previous transmission period and the source data frames of the current transmission period. In addition, if the relay station correctly receives the data frames of the current transmission period, the second data forwarding unit 1080 sends the source data frames, which need to be retransmitted, to the base station through the subchannel.

Compared with the prior art, the relay station provided by the embodiment of the present invention does not require additional timeslots to send data frames that need to be retransmitted, which does not affect data transmission of the next transmission period, and therefore, data transmission efficiency is high.

FIG. 16 is a schematic structural diagram of a base station according to an eighth embodiment of the present invention.

The base station provided by the eighth embodiment of the present invention includes:

a second data receiving unit 1110, configured to receive source data frames and forwarded data frames, where a user equipment sends the source data frames and a relay station sends the forwarded data frames through a same subchannel in sequence;

a data decoding unit 1120, configured to decode, according to the source data frames and the forwarded data frames, source data frames of a current transmission period and source data frames of a previous transmission period; and

a reception report sending unit 1130, configured to send a reception report to the relay station if the source data frames of the current transmission period are decoded unsuccessfully, where the reception report carries sequence numbers of source data frames of the current transmission period and the source data frames are not correctly received by the base station.

The base station provided by the eighth embodiment of the present invention may be used in the corresponding fourth method embodiment.

In the base station provided by the embodiment of the present invention, the data decoding unit 1120 decodes, according to the source data frames and the forwarded data frames, source data frames of the current transmission period and source data frames of the previous transmission period to obtain transmitted data frames of the previous transmission period. If the data decoding unit 1120 fails to decode source data frames of the current transmission period, the reception report sending unit 1130 sends a reception report to the relay station, so that the relay station can retransmit the unsuccessfully decoded source data frames to the base station according to the reception report. Compared with the prior art, during data retransmission in the embodiment of the present invention, the relay station requires no additional timeslots to send data frames that need to be retransmitted, which does not affect data transmission of the next transmission period, and therefore, data transmission efficiency is high.

FIG. 17 is a schematic structural diagram of a data decoding unit in a base station according to an embodiment of the present invention.

In the base station provided by the eighth embodiment of the present invention, the data encoding unit 1120 may specifically include:

a source data frame decoding module 1121, configured to decode, according to the source data frames, the source data frames of the current transmission period; and

a forwarded data frame decoding module 1122, configured to: if the source data frames of the current transmission period are decoded successfully, further decode, according to the correctly decoded data frames of the current transmission period and the forwarded data frames, the data frames of the previous transmission period.

In the embodiment of the present invention, the forwarded data frames received by the second data receiving unit 1110 in the base station are generated by performing joint encoding for data frames of the current transmission period and data frames of the previous transmission period. Therefore, the source data frame decoding module 1121 first decodes, according to the source data frames, the source data frames of the current transmission period, and then the forwarded data frame decoding module 1122 decodes data frames of the previous transmission period according to the correctly decoded data frames of the current transmission period and the forwarded data frames.

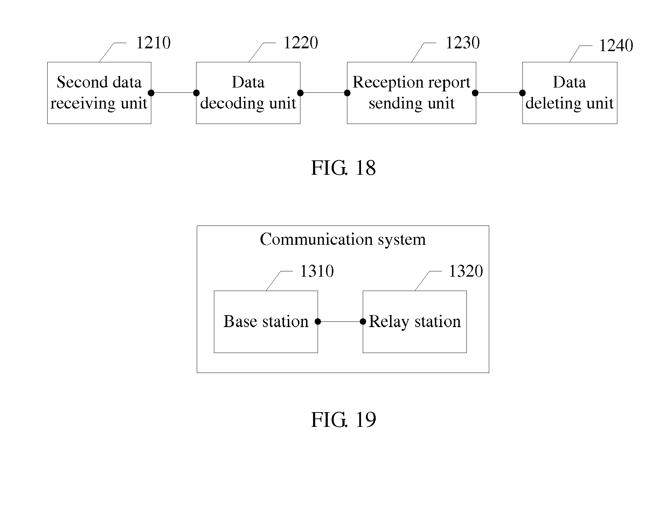

FIG. 18 is a schematic structural diagram of a base station according to a ninth embodiment of the present invention.

The base station provided by the ninth embodiment of the present invention includes:

a second data receiving unit 1210, configured to receive source data frames and forwarded data frames, where a user equipment sends the source data frames and a relay station sends the forwarded data frames through a same subchannel in sequence;

a data decoding unit 1220, configured to decode, according to the source data frames and the forwarded data frames, source data frames of a current transmission period and source data frames of a previous transmission period; and

a reception report sending unit 1230, configured to send a reception report to the relay station if the source data frames of the current transmission period are decoded unsuccessfully, where the reception report carries sequence numbers of source data frames of the current transmission period and the source data frames are not correctly received by the base station.

The base station provided by the ninth embodiment of the present invention may further include:

a data deleting unit 1240, configured to: if the data frames of the previous transmission period are decoded unsuccessfully, discard the data frames of the previous transmission period that fail to be correctly decoded.

In the base station provided by the ninth embodiment of the present invention, the data frames of the previous transmission period that still cannot be decoded after being retransmitted are considered to be lost, and the data frames of the previous transmission period that cannot be correctly decoded are discarded.

It should be noted that the information interaction and execution process between the units in the base station and the units in the relay station are based on the same conception as the method embodiments of the present invention. For details, reference may be made to the description of the method embodiments of the present invention.

FIG. 19 is a schematic structural diagram of a communication system according to a tenth embodiment of the present invention.

The communication system provided by the tenth embodiment of the present invention includes a base station 1310 and a relay station 1320.

The relay station 1330 is configured to: receive a reception report sent by the base station 1310, where the reception report carries sequence numbers of source data frames of a previous transmission period and the source data frames are not correctly received by the base station 1310; receive source data frames of a current transmission period that are sent by a user equipment through a subchannel; store the source data frames of the current transmission period if the source data frames of the current transmission period are successfully received; obtain, according to the reception report and pre-stored source data frames of the previous transmission period, a set C1 of source data frames of the previous transmission period that need to be retransmitted; perform joint encoding for the source data frames in the set C1 and the source data frames of the current transmission period; and send forwarded data frames generated by joint encoding to the base station 1310 through the subchannel.

The base station 1310 receives the source data frames and the forwarded data frames, where a user equipment sends the source data frames and a relay station sends the forwarded data frames through a same subchannel in sequence; decodes, according to the source data frames and the forwarded data frames, the source data frames of the current transmission period and the source data frames of the previous transmission period; and if the source data frames of the current transmission period are decoded unsuccessfully, sends a reception report to the relay station 1320, where the reception report carries sequence numbers of source data frames of the current transmission period and the source data frames are not correctly received by the base station 1310.

The communication system provided by the embodiment of the present invention may be used for retransmitting data frames sent by the user equipment. For the detailed structure of the relay station 1320 in the communication system, reference may be made to the description of the eighth embodiment and ninth embodiment; for the detailed structure of the base station 1310 in the communication system, reference may be made to the description of the sixth embodiment and seventh embodiment.

In the communication system provided by the embodiment of the present invention, if the base station incorrectly receives data frames of only one user equipment in the previous transmission period, the relay station forwards the data frames on each subchannel when forwarding data frames of the current transmission period. Therefore, as long as the data frames of one user equipment can be correctly decoded by the base station, retransmitted data frames can be correctly decoded by decoding information of the subchannel corresponding to the relay station, and data forwarding on other subchannels of the relay station is not affected.

If the base station incorrectly receives data frames of two user equipments in the previous transmission period, in a probability sense, the relay station may forward one of the data frames on a half of subchannels. Likewise, if the user equipment can decode data frames of any user equipment on the subchannels, it can correctly decode the retransmitted data frames.

Usually, there are only a few data frames that need to be retransmitted to the base station. Therefore, the embodiment of the present invention can achieve a good effect, and the user equipment or relay station does not need to waste a frame dedicated for retransmitting data. The data retransmission method provided by the embodiment of the present invention can reduce the time for the base station to wait for retransmission without affecting transmission of new user data of a next transmission period, thereby improving reliability and accuracy of data transmission in the system, reducing a transmission delay, and saving system overheads. In addition, because the data frames that need to be retransmitted may be retransmitted on multiple subchannels, a certain diversity effect can be achieved, thereby improving reliability of data retransmission.

Persons of ordinary skill in the art may understand that all or part of the steps of the methods in the embodiments may be implemented by a computer program instructing relevant hardware. The program may be stored in a computer readable storage medium. When the program is run, a process of each method embodiment is performed. The storage medium may be a magnetic disk, an optical disk, a read-only memory (Read-Only Memory, ROM), a random access memory (Read-Only Memory, RAM), or the like.

The data retransmission method, base station, relay station, and communication system provided by the embodiments of the present invention are described in detail. Persons of ordinary skills in the art can make variations with respect to the implementation and application scope without departing from the idea of the embodiments of the present invention. Therefore, the specification shall not be construed as a limitation on the present invention.

**Claims**

1. A data retransmission method based on orthogonal frequency division multiple access, comprising:

    receiving, by a relay station, a reception report sent by a base station and source data frames of a current transmission period that are sent by a user equipment through a subchannel, wherein the reception report carries sequence numbers of source data frames of a previous transmission period and the source data frames are not correctly received by the base station; obtaining, by the relay station according to the reception report and pre-stored source data frames of the previous transmission period, a set C1 of source data frames of the previous transmission period that need to be retransmitted; performing, by the relay station, joint encoding for the source data frames in the set C1 and the source data frames of the current transmission period; and sending, by the relay station, forwarded data frames generated by joint encoding to the base station through the subchannel.

2. The method according to claim 1, wherein the obtaining, according to the reception report and pre-stored source data frames of the previous transmission period, a set C1 of source data frames of the previous transmission period that need to be retransmitted comprises:

matching the sequence numbers in the reception report with sequence numbers of the pre-stored source data frames of the previous transmission period one by one; and obtaining the set C1 of source data frames corresponding to successfully matched sequence numbers.

3. The method according to claim 1, wherein the performing joint encoding for the source data frames in the set C1 and the source data frames of the current transmission period comprises:

obtaining, from the set C1, a first data frame of the source data frames that need to be retransmitted; and performing XOR encoding for the first data frame and the source data frames of the current transmission period.

4. The method according to claim 1, further comprising:

obtaining, according to the reception report and the pre-stored source data frames of the previous transmission period, the set C1 of the source data frames of the previous transmission period that need to be retransmitted if the source data frames of the current transmission period fail to be received; and sending the source data frames in the set C1 to the base station through the subchannel.

5. The method according to claim 1, wherein after the obtaining, according to the reception report and pre-stored source data frames of the previous transmission period, a set C1 of source data frames of the previous transmission period that need to be retransmitted, the method further comprises:

determining whether idle subchannels exist between the relay station and the base station, and if the idle subchannels exist between the relay station and the base station, obtaining m source data frames from the set C1, wherein m is smaller than or equal to the number of idle subchannels, and sending the m source data frames to the base station through the idle subchannels, respectively; or if the idle subchannels exist between the relay station and the base station, obtaining 2*m source data frames from the set C1, wherein m is smaller than or equal to the number of idle subchannels, performing joint encoding for the 2*m source data frames, and sending the forwarded data frames after encoding to the base station through the idle subchannels, respectively; or if the idle subchannels exist between the relay station and the base station, obtaining m source data frames from the set C1, obtaining m source data frames of the current transmission period, wherein m is smaller than or equal to the number of idle subchannels, performing joint encoding for the m source data frames and the m source data frames of the current transmission period, and sending the forwarded data frames after encoding to the base station through the idle subchannels, respectively.

6. The method according to any one of claims 1 to 5, wherein after the relay station receives the source data frames of the current transmission period that are sent by the user equipment through the subchannel, the method further comprises:

if the source data frames of the current transmission period are received successfully, storing, by the relay station, the successfully received source data frames, wherein the successfully received source data frames are used for data retransmission of a next transmission period.

7. A data retransmission method, comprising:

receiving, by a base station, source data frames and forwarded data frames, where a user equipment sends the source data frames and a relay station sends the forwarded data frames through a same subchannel in sequence;

decoding, by the base station according to the source data frames and the forwarded data frames, source data frames of a current transmission period and source data frames of a previous transmission period; and

if the source data frames of the current transmission period are decoded unsuccessfully, sending, by the base station, a reception report to the relay station, wherein the reception report carries sequence numbers of source data frames of the current transmission period and the source data frames are not correctly received by the base station.

**8.** The method according to claim 7, wherein the decoding, according to the source data frames and the forwarded data frames, source data frames of a current transmission period and source data frames of a previous transmission period comprises:

decoding, according to the source data frames, the source data frames of the current transmission period; and

if the source data frames of the current transmission period are decoded successfully, further decoding, according to the correctly decoded source data frames of the current transmission period and the forwarded data frames, the data frames of the previous transmission period.

**9.** The method according to claim 7, further comprising:

if the data frames of the previous transmission period are decoded unsuccessfully, discarding the data frames of the previous transmission period that fail to be correctly decoded.

**10.** A relay station, comprising:

a report receiving unit, configured to receive a reception report sent by a base station, wherein the reception report carries sequence numbers of source data frames of a previous transmission period and the source data frames are not correctly received by the base station;

a first data receiving unit, configured to receive source data frames of a current transmission period that are sent by a user equipment through a subchannel;

a first retransmitted data obtaining unit, configured to obtain, according to the reception report and pre-stored source data frames of the previous transmission period, a set C1 of source data frames of the previous transmission period that need to be retransmitted;

a data encoding unit, configured to perform joint encoding for the source data frames in the set C1 and the source data frames of the current transmission period; and

a first data forwarding unit, configured to send forwarded data frames generated by joint encoding to the base station through the subchannel.

**11.** The relay station according to claim 10, wherein the first retransmitted data obtaining unit comprises:

a matching module, configured to match the sequence numbers in the reception report with sequence numbers of the pre-stored source data frames of the previous transmission period one by one; and

a first obtaining module, configured to obtain the set C1 of source data frames corresponding to successfully matched sequence numbers.

**12.** The relay station according to claim 10, wherein the data encoding unit comprises:

a second obtaining module, configured to obtain, from the set C1, a first data frame of the source data frames that need to be retransmitted; and

an XOR encoding module, configured to perform XOR encoding for the first data frame and the source data frames of the current transmission period.

**13.** The relay station according to claim 10, further comprising:

a second retransmitted data obtaining unit, configured to: if the source data frames of the current transmission period fail to be received, obtain, according to the reception report and the pre-stored source data frames of the previous transmission period, the set C1 of the source data frames of the previous transmission period that need to be retransmitted; and

a second data forwarding unit, configured to send the source data frames in the set C1 to the base station through the subchannel.

**14.** The relay station according to any one of claims 10 to 13, further comprising:

a data storing unit, configured to: if the first data receiving unit successfully receives the source data frames of the current transmission period, store the successfully received source data frames, wherein the successfully received source data frames are used for data retransmission of a next transmission period.

**15.** A base station, comprising:

a second data receiving unit, configured to receive source data frames and forwarded data frames, where a user equipment sends the source data frames and a relay station sends the forwarded data frames through a same subchannel in sequence;

a data decoding unit, configured to decode, according to the source data frames and the forwarded data frames, source data frames of a current transmission period and source data frames of a previous transmission period; and

a reception report sending unit, configured to send a reception report to the relay station if the source data frames of the current transmission period are decoded unsuccessfully, wherein the reception report carries sequence numbers of source data frames of the current transmission period and the source data frames are not correctly received by the base station.

16. The base station according to claim 15, wherein the data decoding unit comprises:

a source data frame decoding module, configured to decode, according to the source data frames, the source data frames of the current transmission period; and

a forwarded data frame decoding module, configured to: if the source data frames of the current transmission period are decoded successfully, further decode, according to the correctly decoded source data frames of the current transmission period and the forwarded data frames, the data frames of the previous transmission period.

17. The base station according to claim 15, further comprising:

a data deleting unit, configured to: if the data frames of the previous transmission period are decoded unsuccessfully, discard the data frames of the previous transmission period that fail to be correctly decoded.

18. A communication system, comprising a user equipment, wherein:

the communication system further comprises the relay station according to any one of claims 10 to 13 and the bases station according to any one claims 15 to 17.

Receive a reception report sent by a base station and source data frames of a current transmission period that are sent by a user equipment through a subchannel, where the reception report carries sequence numbers of source data frames of a previous transmission period and the source data frames are not correctly received by the base station — 101

Obtain, according to the reception report and pre-stored source data frames of the previous transmission period, a set C1 of source data frames of the previous transmission period that need to be retransmitted — 102

Perform joint encoding for the source data frames in the set and the source data frames of the current transmission period — 103

Send the forwarded data frames generated by joint encoding to the base station through the subchannel — 104

FIG. 1

Match the sequence numbers in the reception report with sequence numbers of the pre-stored source data frames of the previous transmission period one by one — 201

Obtain the set C1 of source data frames corresponding to successfully matched sequence numbers — 202

FIG. 2

| Obtain a first data frame of the source data frames that need to be retransmitted from the set C1 | 301 |

| Perform XOR encoding for the first data frame and the source data frames of the current transmission period | 302 |

FIG. 3

Receive a reception report sent by a base station and source data frames of a current transmission period that are sent by a user equipment through a subchannel, where the reception report carries sequence numbers of source data frames of a previous transmission period and the source data frames are not correctly received by the base station — 401

Store the successfully received source data frames if the source data frames of the current transmission period are successfully received — 402

According to the reception report and pre-stored source data frames of the previous transmission period, obtain a set C1 of source data frames of the previous transmission period that need to be retransmitted — 403

Perform joint encoding for the source data frames in the set and the source data frames of the current transmission period — 404

Send the forwarded data frames generated by joint encoding to the base station through the subchannel — 405

If the source data frames of the current transmission period are not received successfully, obtain, according to the reception report and the pre-stored source data frames of the previous transmission period, the set C1 of the source data frames of the previous transmission period that need to be retransmitted — 406

Send the source data frames in the set C1 to the base station through the subchannel — 407

FIG. 4

Receive a reception report sent by a base station and source data frames of a current transmission period that are sent by a user equipment through a subchannel, where the reception report carries sequence numbers of source data frames of a previous transmission period and the source data frames are not correctly received by the base station — 501

Store the successfully received source data frames if the source data frames of the current transmission period are successfully received — 502

According to the reception report and pre-stored source data frames of the previous transmission period, obtain a set C1 of source data frames of the previous transmission period that need to be retransmitted — 503

Perform joint encoding for the source data frames in the set and the source data frames of the current transmission period — 504

Send the forwarded data frames generated by joint encoding to the base station through the subchannel — 505

Determine whether idle subchannels exist between the relay station and the base station — 506

If idle subchannels exist between the relay station and the base station, obtain m source data frames from the set C1, where m is smaller than or equal to the number of idle subchannels, and send the m source data frames to the base station through idle subchannels, respectively — 507

If idle subchannels exist between the relay station and the base station, obtain 2*m source data frames from the set C1, where m is smaller than or equal to the number of idle subchannels, perform joint encoding for the 2*m source data frames, and send the forwarded data frames after encoding to the base station through the idle subchannels, respectively — 508

If idle subchannels exist between the relay station and the base station, obtain m source data frames from the set C1, obtain m source data frames of the current transmission period, where m is smaller than or equal to the number of idle subchannels, perform joint encoding for the m source data frames and the m source data frames of the current transmission period, and then send the forwarded data frames after encoding to the base station through the idle subchannels, respectively — 509

FIG. 5

Receive source data frames and forwarded data frames, where a user equipment sends the source data frames and a relay station sends the forwarded data frames through a same subchannel in sequence — 601

According to the source data frames and the forwarded data frames, decode source data frames of a current transmission period and source data frames of a previous transmission period — 602

If the source data frames of the current transmission period are decoded unsuccessfully, send a reception report to the relay station, where the reception report carries sequence numbers of source data frames of the current transmission period and the source data frames are not correctly received by the base station — 603

FIG. 6

Decode, according to the source data frames, the source data frames of the current transmission period — 701

If the decoding succeeds, decode data frames of the previous transmission period according to the correctly decoded data frames of the current transmission period and the forwarded data frames — 702

FIG. 7

FIG. 8

| User equipment | Relay station | Base station |
|---|---|---|

801. Source data frames of the current transmission period

802. Source data frames of the current transmission period

803. Receive source data frames and determine whether the source data frames are correctly received

804. Store the data frame X1

805. Determine whether data frames that need to be retransmitted are stored

806. Obtain the data frames that need to be retransmitted

807. Perform XOR calculation for the data frame X1 and data frame Rb3 to generate forwarded data frames

808. Send the forwarded data frames

809. N-M source data frames

810. Receive and decode the source data frames sent by the user equipment

811. Decode the data frames of the previous transmission period

812. Reception report

FIG. 9

Binary channel of two users

FIG. 10

10 dB unequal channel usernumber:20 messagelength:100

FIG. 11

930

Data storing unit

910

Report receiving unit

920

First data receiving unit

940

First retransmitted data obtaining unit

960

First data forwarding unit

950

Data encoding unit

FIG. 12

940

First retransmitted data obtaining unit

941

Matching module

942

First obtaining module

FIG. 13

950

Data encoding unit

951

Second obtaining module

952

XOR encoding module

FIG. 14

1070

Second retransmitted data obtaining unit

1080

Second data forwarding unit

1010

Report receiving unit

1020

First data receiving unit

1030

Data storing unit

1060

First data forwarding unit

1050

Data encoding unit

1040

First retransmitted data obtaining unit

FIG. 15

1110

Second data receiving unit

1120

Data decoding unit

1130

Reception report sending unit

FIG. 16

1120

Data decoding unit

1121

Source data frame decoding module

1122

Forwarded data frame decoding module

FIG. 17

| Second data receiving unit | Data decoding unit | Reception report sending unit | Data deleting unit |

1210  1220  1230  1240

**FIG. 18**

Communication system

| Base station | Relay station |

1310  1320

**FIG. 19**

# INTERNATIONAL SEARCH REPORT

| | International application No. |
| --- | --- |
| | **PCT/CN2011/081255** |

**A. CLASSIFICATION OF SUBJECT MATTER**

see the extra sheet

According to International Patent Classification (IPC) or to both national classification and IPC

**B. FIELDS SEARCHED**

Minimum documentation searched (classification system followed by classification symbols)

IPC: H04L，H04W，H04B

Documentation searched other than minimum documentation to the extent that such documents are included in the fields searched

Electronic data base consulted during the international search (name of data base and, where practicable, search terms used)

CNABS, CNKI,VEN:relay，RS，BS, nodeB，MS，ACK，NACK，retransmi+, cod+, period, unite, collaborat+

**C. DOCUMENTS CONSIDERED TO BE RELEVANT**

| Category* | Citation of document, with indication, where appropriate, of the relevant passages | Relevant to claim No. |
| --- | --- | --- |
| X | CN101562506A (ZTE CORP) 21 Oct. 2009(21.10.2009) | 1-4,6-18 |
| | description page 5 line 20 to page 10 line 20, and figures 4-8 | |
| A | the above | 5 |
| A | SUN Yue et al. Cooperative Hybrid-ARQ Protocol Based on Network Coding. | 1-18 |
| | Journal of Electronics & Information Technology. Oct. 2009, vol. 31, No. 10, pages 2326-2330 | |
| A | CN101213781A(TELEFONAKTIEBOLAGET ERICSSON L M) 02 Jul. 2008(02.07.2008) | 1-18 |
| | the whole document | |
| A | CN101034964A(HUAWEI TECHNOLOGIES CO LTD) 12 Sept. 2007(12.09.2007) | 1-18 |
| | the whole document | |
| A | WO2010048748A1(ALCATEL SHANGHAI BELL CO LTD) 06 May 2010(06.05.2010) | 1-18 |
| | the whole document | |

☐ Further documents are listed in the continuation of Box C.　　　☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 Jan. 2012(10.01.2012) | 16 Feb. 2012(16.02.2012) |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br>　　　　　　XUE, Yu<br><br>Telephone No. (86-10) 62412008 |

Form PCT/ISA /210 (second sheet) (July 2009)

# EP 2 685 654 A1

## INTERNATIONAL SEARCH REPORT
Information on patent family members

| | International application No. |
|---|---|
| | PCT/CN2011/081255 |

| Patent Documents referred in the Report | Publication Date | Patent Family | Publication Date |
|---|---|---|---|
| CN101562506A | 21.10.2009 | WO2009127141A1 | 22.10.2009 |
| CN101213781A | 02.07.2008 | US2008310409A1 | 18.12.2008 |
| | | US7710908B2 | 04.05.2010 |
| | | WO2007008163A1 | 18.01.2007 |
| | | EP1900137A1 | 19.03.2008 |
| CN101034964A | 12.09.2007 | CN101034964B | 06.04.2011 |
| WO2010048748A1 | 06.05.2010 | CN102119496A | 06.07.2011 |

**INTERNATIONAL SEARCH REPORT**

International application No.

PCT/CN2011/081255

**A. CLASSIFICATION OF SUBJECT MATTER**

H04L1/16(2006.01)i

H04L1/18(2006.01)i

H04L12/56(2006.01)i

Form PCT/ISA /210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201110059115